# EUROPÄISCHE PATENTSCHRIFT

(11) **EP 2 109 235 B1**
(45) Veröffentlichungstag und Bekanntmachung des Hinweises auf die Patenterteilung: **29.05.2013**
(21) Anmeldenummer: 08007048.5
(22) Anmeldetag: 09.04.2008
(51) Int. Cl.: H04B 10/00, G02B 6/36

(54) **Drehübertrager**
Rotary joint
Transmetteur

(43) Veröffentlichungstag der Anmeldung: 14.10.2009
(73) Patentinhaber: Siemens Aktiengesellschaft, 80333 München (DE)
(72) Erfinder: Wetzel, Ulrich, 07980 Berga (DE)

(56) Entgegenhaltungen:
- EP-A- 1 178 338
- WO-A-99/18463
- WO-A-2005/015788
- US-A- 5 010 254

## Beschreibung

Die Erfindung betrifft einen Drehübertrager.

Drehübertrager werden zur Übertragung von Daten von einem drehenden Gegenstand, wie z.B. einer Welle, auf einen ruhenden Gegenstand wie z.B. eine in einem Schaltschrank sich befindliche Regelungsbaugruppe eingesetzt.

Bei handelsüblichen Drehübertragern erfolgt z.B. die Übertragung der Daten mittels Schleifringen.

Weiterhin sind auch Drehübertrager bekannt, bei der eine Übertragung der Daten vom drehenden auf den ruhenden Teil mittels optischer Signalübertragung erfolgt. Ein im axialen Drehzentrum der Welle angeordneter Sender sendet dabei ein Lichtsignal an einen ebenfalls axial zentrisch angeordneten ruhenden Empfänger. Ein solcher handelsüblich ausgebildeter optischer Drehübertrager ist aber ungeeignet zur Übertragung von Signalen, wenn die Welle als Hohlwelle ausgebildet ist, da der Sender nicht im axialen Drehzentrum der Welle ange> bracht werden kann, sondern außerhalb des Drehzentrums auf der Hohlwelle angebracht werden, so dass eine Übertragung von Daten nur möglich ist, wenn die Welle und damit der Sender eine bestimmte Winkellage aufweisen, so dass eine Übertragung auf den ebenfalls außerhalb des Drehzentrums angeordneten Empfänger möglich ist. Bei der Verwendung eines einzelnen Senders und eines einzelnen Empfängers ist dann im Allgemeinen pro Umdrehung der Welle eine Übertragung von Daten nur genau einmal, bei einer bestimmten Winkellage der Welle möglich, nämlich genau dann, wenn Sender und Empfänger sich axial gegenüberstehen, so dass der vom Sender ausgesandte Lichtstrahl vom Empfänger empfangen werden kann.

In der PCT-Anmeldung mit dem Aktenzeichen PCT/EP2007/061183 ist ein Drehübertrager beschrieben, bei dem elektrische Signale in optische Signale umgewandelt und über einen lichtleitenden Hohlkörper, der in Form eines Rohres vorliegt, übertragen werden. Hierdurch ist es möglich, einen Rotationsspalt optisch zu überbrücken. Durch die Verwendung von lichtleitenden Rohren wird ein Durchgang einer Welle in der zentralen Drehachse des Drehübertragers ermöglicht und somit ist der Drehübertrager an jeder Position auf der Welle positionierbar, da die Welle durch den Drehübertrager hindurch geführt werden kann. Damit ein Empfänger am Rohrende bei jedem Drehwinkel die Lichtsignale sicher empfangen kann, muss sich das Licht gleichmäßig über die Stirnseite des Rohres verteilen. Das Rohr muss deshalb eine bestimmte Mindestlänge aufweisen, denn die abhängig vom Abstrahlwinkel der Lichteinkoppelstellen des Rohrs sich ausbreitenden Lichtkegel, sollten alle lichtfreien Lücken möglichst ausfüllen. Je größer der Durchmesser des Rohrs, desto länger muss er sein, damit sich die von den Lichteineinkoppelstellen ausgehenden Lichtkegeln möglichst berühren bzw. überlagern. Um bei großen Durchmessern (größer ca. 400 mm) des Rohrs noch eine akzeptable Länge des Rohrs zu gewährleisten, wird folglich eine große Anzahl von Lichteinkoppelstellen benötigt.

Weiterhin ist die Fertigung eines lichtleitenden Rohrs mit einem großen Durchmesser ist sehr aufwendig. Die Rohre bestehen im Allgemeinen aus einem lichtdurchlässigen Kunststoff (PMMA) oder aus Glas. So müssen, um lichtleitende Rohre mit großen Durchmesser (größer ca. 400 mm) zu fertigen, teuere Spritzgusswerkstoffe angefertigt werden. Weiterhin ist es fertigungstechnisch äußerst schwierig, entsprechend notwendige dünne Rohre mit großem Durchmesser zu fertigen. Um die Ein- und Auskoppelverluste klein zu halten, muss die Wandstärke der Rohre dem Durchmesser der Sende- bzw. Empfängerkoppelstellen angepasst werden. Diese betragen aber in der Regel nur wenige Millimeter. Bei Rohren mit großem Durchmesser ist dies technisch nicht zu realisieren und es entstehen entsprechend hohe Ein- und Auskoppelverluste. Somit ist die Verwendung von lichtleitenden Rohren zur optischen Signalübertragung bei rotierenden Wellen, die einen Durchmesser von 400 mm überschreiten technisch nur mit sehr hohem Fertigungsaufwand möglich und mit hohen Ein- und Auskoppelverlusten verbunden. Unter einer Welle mit einem großen Durchmesser wird dabei eine Welle mit einem Durchmesser von größer 400 mm verstanden.

Aus der GB 1587531 ist ein Drehübertrager bekannt, bei dem lichtleitende Fasern zu einem Hohlkörper angeordnet werden. Eine solche Vorgehensweise ist jedoch bei Wellen mit großen Durchmessern z.B. aufgrund der benötigten hohen Anzahl von Fasern und der dazu notwendigen optischen Verbindungstechnik in der Praxis technisch praktisch nicht realisierbar.

Aus der Druckschrift EP 1 178 338 A2 ist eine parallele Datenübertragung durch segmentierte Wellenleiter großen Durchmessers bekannt. Die Übertragung wird durch einen Drehübertrager gewährleistet, der mehrere segmentierte Wellenleiter besitzt. Jeder der mehreren Wellenleiter ist auf einem Stator angeordnet. Sie sind in Umfangsrichtung voneinander beabstandet. Die Räume zwischen den segmentierten Wellenleitern sind nicht reflektierend. Jeder der segmentierten Wellenleiter besitzt einen optischen Empfänger. Die optischen Sender sind auf dem Rotor angeordnet. Das Licht wird in tangentialer Richtung in die Wellenleiter eingespeist.

Das Dokument WO 2005/015788 A1 beschreibt einen optischen Drehübertrager mit Koppelschlitten. Ein Lichtleiter weist entlang des Kreisumfangs um eine Drehachse eine Aussparung in Form eines Bogensegments auf. In dieser Aussparung befindet sich optisch transparentes Material, welches ein optisches Gitter trägt. Lichtstrahlen, welche innerhalb dieses Bogensegments auf das Gitter auftreffen, werden durch das Gitter nach außen abgelenkt und mittels einer ersten Linse sowie einer zweiten Linse auf die Eintrittsöffnung einer lichtleitenden Faser fokussiert.

Es ist Aufgabe der Erfindung einen Drehübertrager zu schaffen, der eine optische Signalübertragung bei einer rotierenden Welle mit einem großem Durchmesser ermöglicht und an jeder Position entlang der Welle positioniert werden kann.

Diese Aufgabe wird gelöst durch einen Drehübertrager nach **Anspruch 1**.

Vorteilhafte Ausbildungen der Erfindung ergeben sich aus den abhängigen Ansprüchen.

Es erweist sich als vorteilhaft, wenn der Drehübertrager zweite lichtleitende bogenförmige Rohrsegmente aufweist, wobei die zweiten Rohrsegmente zu einer zweiten rohrförmigen Anordnung angeordnet sind, wobei die ersten Rohrsegmente und die zweiten Rohrsegmente relativ zueinander drehbar und koaxial angeordnet sind, wobei die ersten Lichtsignale vom ersten Sender über die ersten und die zweiten Rohrsegmente zum ersten Empfänger übertragbar sind, wobei der Drehübertrager mindestens einen zweiten Sender zur Erzeugung von zweiten Lichtsignalen und mindestens einen zweiten Empfänger zum Empfang von zweiten Lichtsignalen aufweist, wobei die zweiten Lichtsignal vom zweiten Sender über die zweiten und die ersten Rohrsegmente zum zweiten Empfänger übertragbar sind. Hierdurch wird eine bidirektionale Übertragung ermöglicht.

Ferner erweist es sich als vorteilhaft, wenn zumindest bei einem Teil der ersten Rohrsegmente, der erste Sender über mehrere erste Lichtleiter zur Übertragung der ersten Lichtsignale mit den dem ersten Sender zugewandten Stirnseiten der ersten Rohrsegmente verbunden ist. Hierdurch wird es ermöglicht, in mehrere der Rohrsegmente oder in alle Rohrsegmente über einen gemeinsamen Sender Lichtsignale einzuspeisen.

Weiterhin erweist es sich als vorteilhaft, wenn die ersten Lichtleiter in der Mitte der jeweiligen Stirnseite mit den ersten Rohrsegmenten verbunden sind. Hierdurch wird eine optimale gleichmäßige Ausbreitung der Lichtsignale in den Rohrsegmenten gewährleistet.

Ferner erweist es sich als vorteilhaft, wenn zumindest bei einem Teil der zweiten Rohrsegmente, der zweite Sender über mehrere zweite Lichtleiter zur Übertragung der zweiten Lichtsignale mit den dem zweiten Sender zugewandten Stirnseiten der zweiten Rohrsegmente verbunden ist. Hierdurch wird es ermöglicht, in mehrere der Rohrsegmente oder in alle Rohrsegmente einer Seite des Drehübertragers über einen gemeinsamen Sender Lichtsignale einzuspeisen.

Ferner erweist es sich als vorteilhaft, wenn die zweiten Lichtleiter in der Mitte der jeweiligen Stirnseite mit den zweiten Rohrsegmenten verbunden sind. Hierdurch wird eine optimale gleichmäßige Ausbreitung der Lichtsignale in den Rohrsegmenten gewährleistet.

Ferner erweist es sich als vorteilhaft, wenn der Drehübertrager mehrere erste Sender zur Erzeugung erster Lichtsignale aufweist, wobei die ersten Sender derart angeordnet sind, dass eine Einspeisung der ersten Lichtsignale in die den ersten Sendern zugewandten Stirnseiten der ersten Rohrsegmente erfolgt. Durch die Verwendung mehrerer Sender werden besonders starke Lichtsignale erzeugt, wodurch die Übertragungssicherheit erhöht wird.

Ferner erweist es sich als vorteilhaft, wenn die Einspeisung der ersten Lichtsignale in der Mitte der den ersten Sendern zugewandten Stirnseiten der ersten Rohrsegmente erfolgt. Hierdurch wird eine optimale gleichmäßige Ausbreitung der Lichtsignale in den Rohrsegmenten gewährleistet.

Ferner erweist es sich als vorteilhaft, wenn der Drehübertrager mehrere zweite Sender zur Erzeugung zweiter Lichtsignale aufweist, wobei die zweiten Sender derart angeordnet sind, das eine Einspeisung der zweiten Lichtsignale in die den zweiten Sendern zugewandten Stirnseiten der zweiten Rohrsegmente erfolgt. Durch die Verwendung mehrerer Sender werden besonders starke Lichtsignale erzeugt, wodurch die Übertragungssicherheit erhöht wird.

Weiterhin erweist es sich als vorteilhaft, wenn die Einspeisung der zweiten Lichtsignale in der Mitte der den zweiten Sendern zugewandten Stirnseiten der zweiten Rohrsegmente erfolgt. Hierdurch wird eine optimale gleichmäßige Ausbreitung der Lichtsignale in den Rohrsegmenten gewährleistet.

Ferner erweist es sich als vorteilhaft, wenn der erste Empfänger über einen Fasersplitter mit mindestens zwei benachbart angeordneten ersten Rohrsegmenten verbunden ist. Durch die Verwendung eines empfängerseitigen Splitters kann in jeder Drehlage ein sicherer Empfang gewährleistet werden, auch dann, wenn die Lichtsignale sich ungleichmäßig über die empfängerseitigen Stirnseiten der Rohrsegmente verteilten und somit die Signalstärke der Lichtsignale entlang der Stirnseiten inhomogen ist.

Ferner erweist es sich als vorteilhaft, wenn der zweite Empfänger über einen lichtleitenden Splitter mit den dem Empfänger zugewandten Stirnseiten von mindestens zwei benachbart angeordneten zweiten Rohrsegmenten verbunden ist. Durch die Verwendung eines empfängerseitigen Splitters kann in jeder Drehlage ein sicherer Empfang gewährleistet werden, auch dann, wenn die Lichtsignale sich ungleichmäßig über die empfängerseitigen Stirnseiten der Rohrsegmente verteilten und somit die Signalstärke der Lichtsignale entlang der Stirnseiten inhomogen ist.

Ferner erweist es sich als vorteilhaft, wenn der erste Empfänger im Bereich um die Mitte der Stirnseite eines der ersten Rohrsegmente angeordnet ist und/oder der zweite Empfänger im Bereich um die Mitte der Stirnseite eines der zweiten Rohrsegmente angeordnet ist. Bei der bidirektionalen Ausführungsform ist es von Vorteil den Empfänger auf jeder Seite so weit wie möglich mittig auf der Stirnseite des jeweiligen Rohrsegments anzuordnen, um auch bei ungleichmäßiger Ausleuchtung der empfängerseitigen Stirnseite des jeweiligen Rohrsegments einen sicheren Empfang zu gewährleisten.

Ferner erweist es sich als vorteilhaft, wenn die ersten und/oder die zweiten Rohrsegmente eine dünne Wandstärke aufweisen, da dann eine gute Lichtleitfähigkeit gegeben ist und die Ein- und Auskoppelung der Lichtsignale mit nur geringen Verlusten erfolgt.

Zwei Ausführungsbeispiele der Erfindung sind in der Zeichnung dargestellt und werden im Folgenden näher erläutert. Dabei zeigen:
- FIG 1: eine erfindungsgemäße rohrförmige Anordnung von lichtleitenden gebogenen Rohrsegmenten,
- FIG 2: ein erstes Ausführungsbeispiel der Erfindung für eine unidirektionale Übertragung,
- FIG 3: eine Schnittansicht eines erfindungsgemäßen Drehübertragers für eine unidirektionale Datenübertragung,
- FIG 4: ein Ausführungsbeispiel des erfindungsgemäßen Drehübertragers für eine bidirektionale Datenübertragung,
- FIG 5: eine Schnittansicht des erfindungsgemäßen Drehübertragers für eine bidirektionale Datenübertragung und
- FIG 6: ein Beispiel für eine Ankopplung eines Senders über Lichtwellenleiter an mehrere Rohrelemente.

Erfindungsgemäß erfolgt die optische Übertragung mittels Rohrsegmente. Die Rohrsegmente lassen sich einfach und kostengünstig fertigen und ihre optischen Eigenschaften sind bedingt durch ihre räumliche Geometrie gut kontrollierbar.

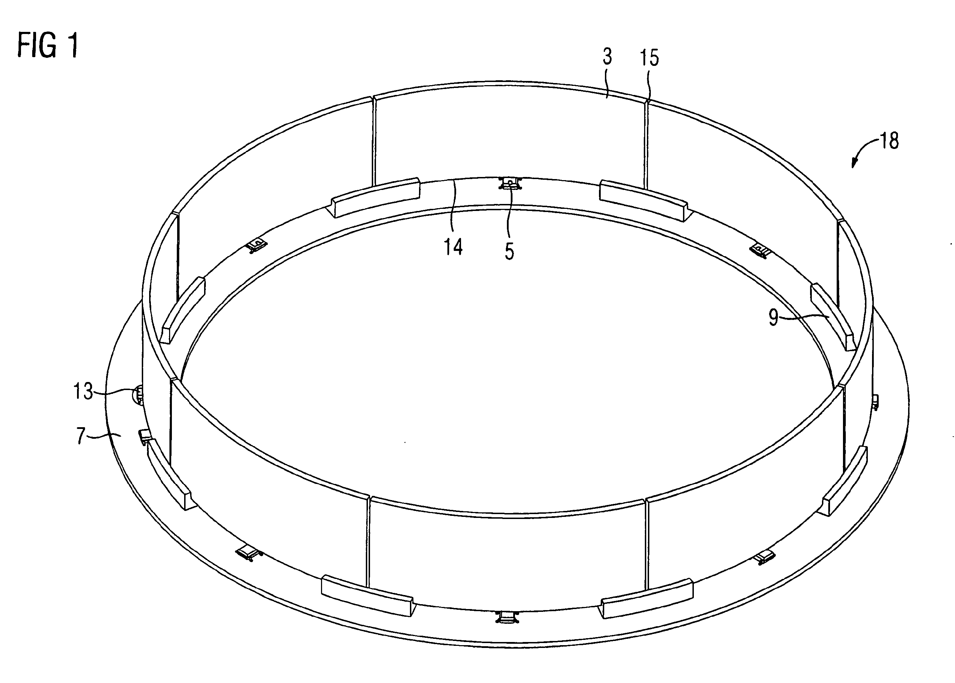

In FIG 1 ist aus ersten Rohrsegmenten angeordnete rohrförmige Anordnung 18 gezeigt. Der Übersichtlichkeit halber ist nur ein erstes Rohrsegment 3 mit Bezugszeichen versehen. Die Rohrsegmente weisen eine bogenförmige räumliche Geometrie auf, wobei sich die Rohrsegmente unter Berücksichtigung der entstehenden Spalten näherungsweise zu einem Rohr zusammensetzen lassen. Die Rohrsegmente sind als im Raum gebogene vorzugweise rechteckförmige Elemente ausgebildet. Hierdurch wird es möglich mit nur wenigen Rohrelementen (z.B. 3 bis 30 Rohrelemente) die rohrförmige Anordnung, auch bei einer Welle mit einem großen Durchmesser zu realisieren und solchermaßen auch bei Wellen mit großen Durchmessern eine optische Übertragung zu ermöglichen Die Rohrsegmente sind im Rahmen des Ausführungsbeispiels dünn, d.h. die Wandstärke der Rohrsegmente ist klein gegenüber ihrer Höhe H und Breite B. Die Wandstärke beträt in der Regel nur wenige Millimeter (z.B. kleiner 10 Millimeter, so dass sich die Lichtsignale mit hoher Effizienz Ein- und Auskoppeln lassen und das Licht gut leiten. Die einzelnen Rohrsegmente sind durch einen Spalt 15, insbesondere einen Luftspalt voneinander getrennt, wobei der Übersichtlichkeit halber in FIG 1 nur ein Spalt 15 mit einem Bezugszeichen versehen ist. Die ersten Rohrsegmente sind durch Stützelemente untereinander und mit einer ersten Leiterplatte 7 verbunden. Der Übersichtlichkeit halber ist nur ein Stützelement 9 mit Bezugszeichen versehen. Die ersten Rohrsegmente sind solchermaßen mittels der Stützelemente zu einer lichtleitenden rohrförmigen Anordnung 18 angeordnet. Auf der ersten Leiterplatte 7 sind zur Erzeugung von Lichtsignalen erste Sender angeordnet, wobei die ersten Sender derart angeordnet sind, dass eine Einspeisung von Lichtsignalen in die den ersten Sendern zugewandten Stirnseiten der ersten Rohrsegmente erfolgt. In FIG 1 ist der Übersichtlichkeit halber nur ein erster Sender 5 und die dem ersten Sender 5 zugewandte Stirnseite 14 eines ersten Rohrsegments mit Bezugszeichen versehen. Im Falle einer bipolaren Übertragung ist auf der ersten Leiterplatte 7 zusätzlich ein zweiter Empfänger 13 im Bereich um die Mitte der Stirnseite eines der ersten Rohrsegmente angeordnet. Im Falle einer unidirektionalen Übertragung ist der zweite Empfänger 13 nicht vorhanden.

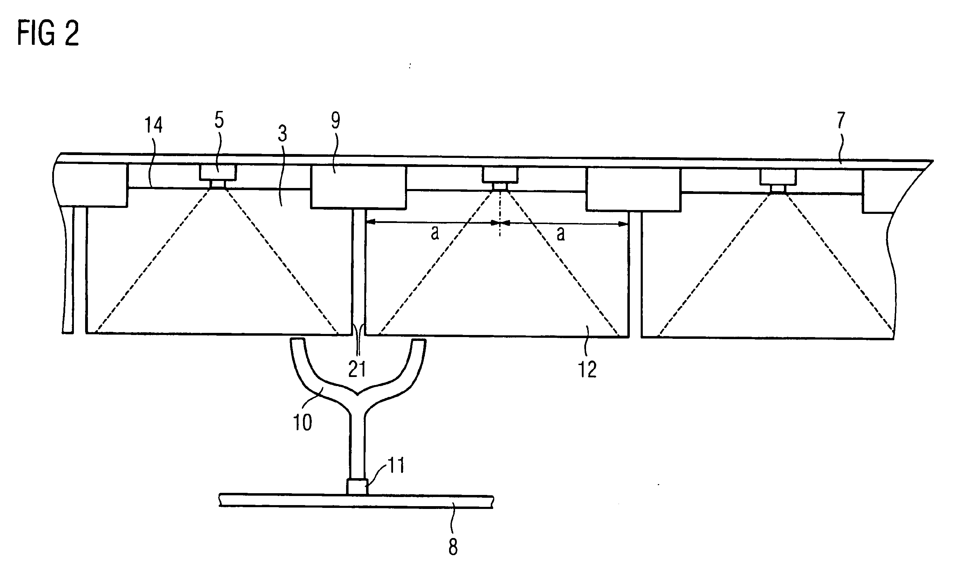

In FIG 2 ist in Form einer schematisierten Darstellung das Prinzip der Übertragung bei einer unidirektionalen Datenübertragung dargestellt. Gleiche Elemente sind dabei mit gleichen Bezugszeichen versehen wie in FIG 1. In FIG 2 ist dabei ein Ausschnitt der rohrförmigen Anordnung gemäß FIG 1 auf eine Fläche projiziert dargestellt.

Jedem ersten Rohrsegment wird ein erster Sender zugeordnet, wobei der Übersichtlichkeit halber nur ein erster Sender 5 und ein erstes Rohrsegment 3 mit Bezugszeichen versehen sind. Die Lichteinspeisung in die einzelnen ersten Rohrsegmente erfolgt dabei über einen einem jeden ersten Rohrsegment zugeordneten erster Sender, der vorzugsweise wie in FIG 2 dargestellt, in der Mitte der dem Sender zugewandten Stirnseite des jeweiligen ersten Rohrsegments angeordnet ist. (siehe Distanz a). Hierdurch wird eine gleichmäßige Ausleuchtung Stirnseiten der ersten Rohrsegmente auf der Empfängerseite gewährleistet.

Gestrichelt gezeichnet ist in FIG 2 beispielhaft ein Bereich 12 der Ausleuchtung dargestellt indem die Lichtsignale übertragen werden. Auf der anderen Seite des Drehübertragers ist ein erster Empfänger 11 auf einer zweiten Leiterplatte 8 angeordnet. Der Empfänger 11 dient zum Empfang der von den ersten Sendern erzeugten Lichtsignale. Idealerweise werden die räumlichen Ausmaße der Rohrsegmente dabei so gewählt, dass auf Empfängerseite die Stirnseite der Rohrsegmente vollständig ausgeleuchtet wird. In der Praxis ist dies aber häufig z.B. aus baulichen Gegebenheiten nicht möglich. Der Bereich der Ausleuchtung 12 kann wie in FIG 2 dargestellt, in der Praxis z.B. etwas kleiner sein als die Länge der Stirnseite der ersten Rohrsegmente oder aber an den seitlichen Randbereichen 21 der ersten Rohrsegmente treten Reflexionen auf, bei einer entsprechend gewählten breiten Ausleuchtung der ersten Rohrsegmente. Die Folge davon ist, dass die Stärke der Lichtsignale nicht mehr an den empfängerseitigen Stirnseiten der Rohrsegmente homogen ist und insbesondere in den Randbereichen häufig geringer ist. Um dennoch eine gute sichere Übertragung zu gewährleisten, kann der erste Empfänger entweder entsprechend groß sein, so dass er gleichzeitig den Ausleuchtebereich von zwei benachbarten Rohrsegmenten umfasst oder aber an wie in FIG 2 dargestellt, kann ein handelüblicher erster Empfänger 11 verwendet werden, wobei der erste Empfänger 11 die Lichtsignale über einen Splitter 10, der im Ausführungsbeispiel als Fasersplitter ausgebildet ist, aus zwei benachbarten erste Rohrsegmente empfängt. Die beiden offenen Enden des Fasersplitters werden dabei so angeordnet, dass sie in einem Bereich in dem bei den beiden benachbarten Rohrsegmenten eine sichere Ausleuchtung gewährleistet ist liegen. Gegebenenfalls können auch die Lichtsignale von mehr wie zwei benachbarte Rohrsegmenten über ein z.B. in drei Teile aufgesplitteten Splitter ausgekoppelt werden und zum ersten Empfänger 11 geleitet werden. Es sei dabei angemerkt, dass im Rahmen des Ausführungsbeispiels die zweite Leiterplatte 8, der erste Empfänger 11 sowie der Phasersplitter 10 den Stator bildet, der ortsfest stehen bleibt und die ersten Sender, die erste Leiterplatte 7, die Stützelemente sowie die Rohrsegmente den Rotor bilden, welcher sich mit der Welle dreht. Dies muss jedoch nicht so sein, sondern kann auch genau umgekehrt sein.

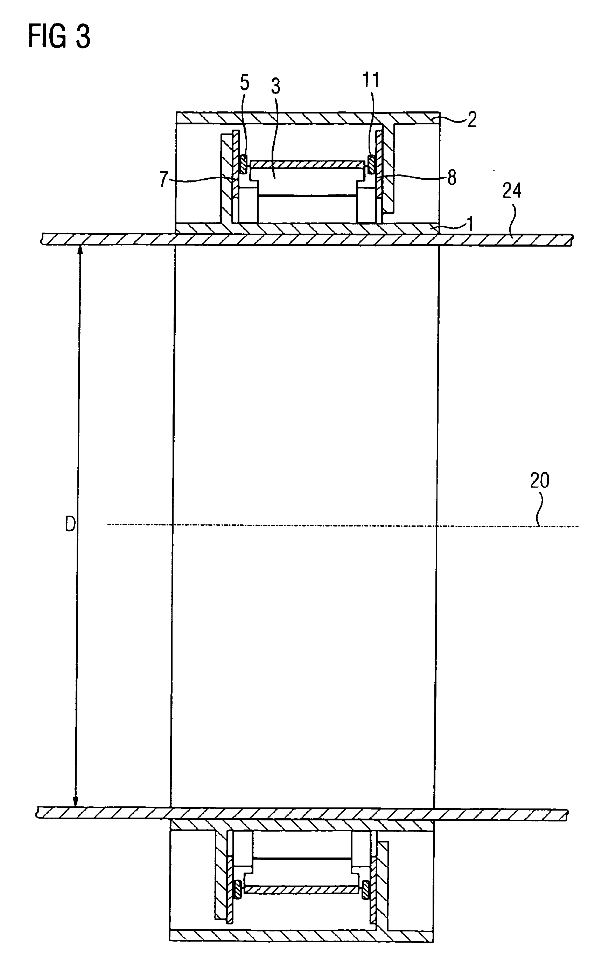

In FIG 3 ist eine schematisierte Schnittzeichnung des erfindungsgemäßen Drehübertragers im Falle einer unidirektionalen Übertragung dargestellt. FIG 3 ist dabei mit den gleichen Bezugszeichen versehen wie in FIG 1 und FIG 2. Der Drehübertrager weist dabei ein rotationssymmetrisches inneres Gehäuse 1 auf, an dem die erste Leiterplatte 7 angeordnet ist. Weiterhin weist der Drehübertrager ein ruhendes äußeres Gehäuse 2 auf, an dem die zweite Leiterplatte 8 angeordnet ist. Die Drehachse des Drehübertragers ist dabei mit dem Bezugszeichen 20 versehen. Das innere Gehäuse 1 ist bei Betrieb mit der Welle 24 drehfest verbunden. Die Welle wird dabei durch den Drehübertrager durchgeführt, wobei die Welle einen Durchmesser D aufweist. Der Drehübertrager ist somit an jeder beliebigen Position entlang der Welle positionierbar. Es sei dabei angemerkt, dass der Übersichtlichkeit halber in den Figuren nur die zum Verständnis der Erfindung wichtigen Komponenten dargestellt sind.

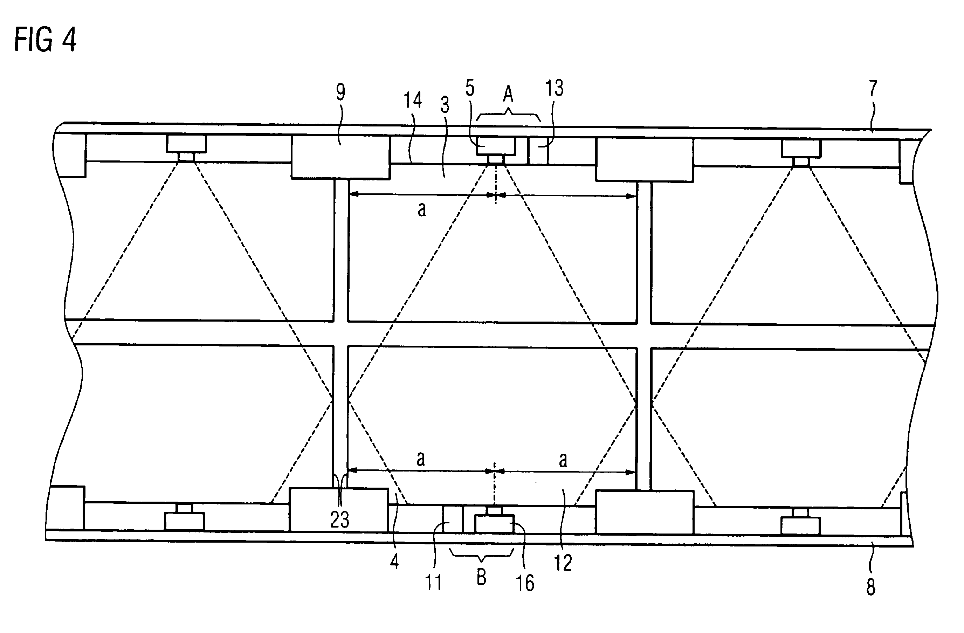

In FIG 4 ist eine Ausführungsform des Drehübertragers für eine bidirektionale Übertragung dargestellt.

Zur Realisierung einer bidirektionalen Übertragung wird die in FIG 1 beschriebene erste rohrförmige Anordnung aus Rohrsegmenten zusammen mit den Sendern und den Empfänger zweifach benötigt. Der Drehübertrager weist somit zweite lichtleitende bogenförmige Rohrsegmente auf. Wobei der Übersichtlichkeit halber nur ein zweites Rohrsegment 4 mit Bezugszeichen versehen ist. Die zweiten Rohrsegmente sind dabei entsprechend, wie in FIG 1 beschrieben, zu einer zweiten rohrförmigen Anordnung angeordnet und identisch wie in FIG 1 ausgebildet. Die ersten Rohrsegmente und die zweiten Rohrsegmente sind dabei relativ zueinander drehbar und koaxial angeordnet. Die ersten Lichtsignale werden dabei von den ersten Sendern (nur ein erster Sender 5 ist mit einem Bezugszeichen versehen) über die ersten und die zweiten Rohrsegmente zum ersten Empfänger 11 übertragen. Zur Übertragung in die entgegengesetzte Richtung weist der Drehübertrager zweite Sender auf, wobei der Übersichtlichkeit halbe nur ein zweiter Sender 16 in FIG 4 mit Bezugszeichen versehen ist. Die zweiten Sender erzeugen zweite Lichtsignale. Weiterhin weist der Drehübertrager zum Empfang der zweiten Lichtsignale einen zweiten Empfänger 13 auf. Die zweiten Lichtsignale werden dabei von den zweiten Sendern über die zweiten und die ersten Rohrsegmente zum zweiten Empfänger 13 übertragen.

Der Bereich der Ausleuchtung der Rohrsegmente im Falle einer Lichtsignalübertragung von den ersten Sendern zum ersten Empfänger 11 ist in FIG 4 dargestellt. Wie schon entsprechend in FIG 2 beschrieben, kann es auch bei der bidirektionalen Ausführungsform vorkommen, das in den Seitenbereichen 23 an den Rohrsegmenten Reflektionen auftreten, die zu einer schlechteren Ausleuchtung der empfängerseitigen Stirnfläche der Rohrsegmente in den Randbereichen führen. Um eine sehr hohe Übertragungssicherheit zu gewährleisten, ist es deshalb von Vorteil, den ersten Empfänger 11 im Bereich um die Mitte der Stirnseite eines der ersten Rohrsegmente anzuordnen und den zweiten Empfänger 13 im Bereich um die Mitte der Stirnseite eines der zweiten Rohrsegmente anzuordnen. Die Empfänger werden solchermaßen in der Nähe eines Senders angeordnet.

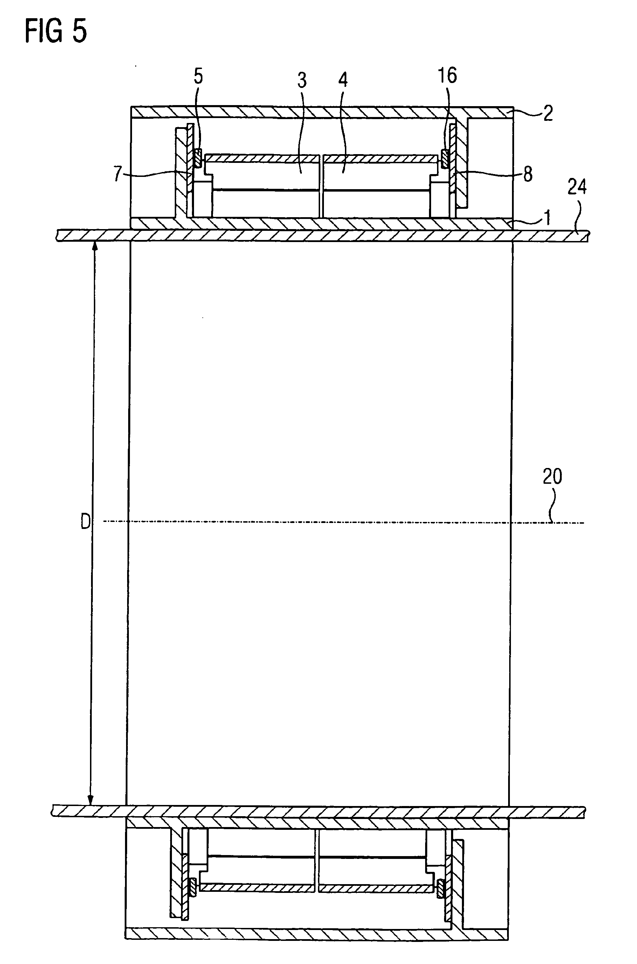

In FIG 5 ist in Form einer schematisierten Schnittdarstellung der Drehübertrager im Falle für die bidirektionale Signalübertragung dargestellt. Gleiche Elemente sind dabei mit gleichen Bezugszeichen versehen wie in FIG 4 und FIG 3. Im Ausführungsbeispiel gemäß FIG 5 drehen sich dabei die ersten Rohrsegmente mit dem inneren Gehäuse 1 und der Welle 24 mit, während die zweiten Rohrsegmente zusammen mit dem äußeren Gehäuse 2 und dem zweiten Sender 16 den Stator bilden und ortsfest angeordnet sind.

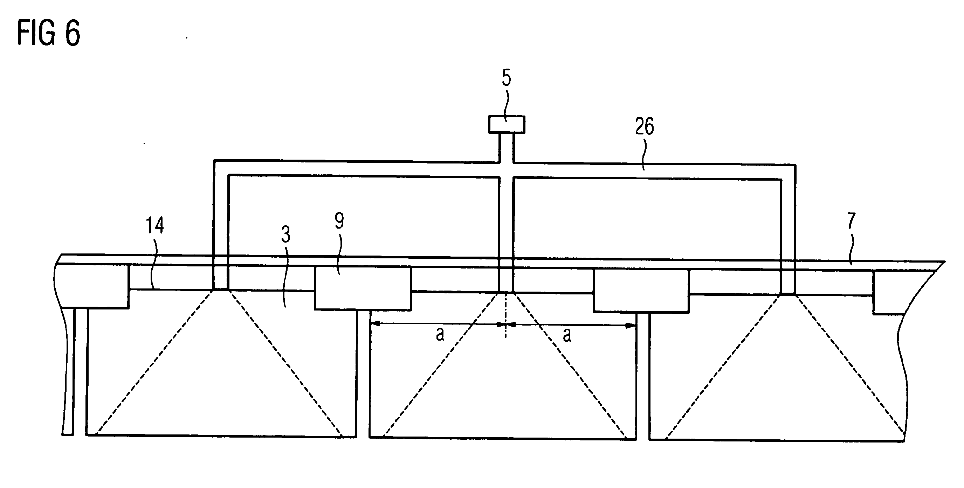

In den Ausbildungen der Erfindung gemäß FIG 1 bis FIG 5 wurde jedes Rohrsegment von einem ihm zugeordneten Sender angestrahlt und solchermaßen die Lichtsignale in die Rohrsegmente eingespeist. Dies hat den Nachteil, dass relativ viele Sender benötigt werden. Um Sender einzusparen, kann auch entsprechend der in FIG 6 schematisiert dargestellten Ausführungsform, im Extremfall nur ein einziger erster Sender 5 vorhanden sein, wobei die Lichtsignale welche vom ersten Sender 5 erzeugt werden, über mehrere erste Lichtleiter 26 in die ersten Rohrsegmente eingespeist werden. Der erste Sender 5 ist hierzu über mehrere erste Lichtleiter 26 zur Übertragung der ersten Lichtsignale mit den dem ersten Sender zugewandten Stirnseiten der ersten Rohrsegmente verbunden. Um eine homogene symmetrische Ausleuchtung der Rohrsegmente zu gewährleisten, ist es dabei von Vorteil, die ersten Lichtleiter in der Mitte der jeweiligen Stirnseite mit den ersten Rohrsegmenten zu verbinden, wie in FIG 6 dargestellt. Reicht die Sendestärke bei Verwendung nur eines Senders nicht aus, können aber auch zwei oder mehr erste Sender verwendet werden und diese dann über mehrere erste Lichtwellenleiter mit den ersten Rohrsegmenten verbunden werden. Solchermaßen ist zumindest bei einem Teil (nicht notwendiger weise bei allen) der ersten Rohrsegmente der erste Sender über mehrere erste Lichtleiter zur Übertragung der ersten Signale mit den dem ersten Sender zugewandten Stirnseiten der ersten Rohrsegmente verbunden.

Analog zu der bezüglich der ersten Rohrsegmente in FIG 6 beschriebenen Ausbildung der Erfindung mit mehreren ersten Lichtleitern 26 kann auch bezüglich der zweiten Rohrsegmente die Einspeisung mittels mehrerer zweiter Lichtleiter über ein oder mehrere zweite Sender erfolgen.

Es sei an dieser Stelle angemerkt, dass die Erfindung auch bei Wellen mit einem Durchmesser von kleiner oder gleich 400 mm verwendet werden kann.

## Patentansprüche

1. Drehübertrager, wobei der Drehübertrager erste lichtleitende bogenförmige Rohrsegmente (3) aufweist, wobei die ersten Rohrsegmente (3) zu einer ersten rohrförmigen Anordnung (18) angeordnet sind, wobei der Drehübertrager mindestens einen ersten Sender (5) zur Erzeugung von ersten Lichtsignalen und mindestens einen ersten Empfänger (11) zum Empfang der ersten Lichtsignale aufweist, wobei die ersten Lichtsignale vom ersten Sender (5) über die ersten Rohrsegmente (3) zum ersten Empfänger (11) übertragbar sind,
**dadurch gekennzeichnet, dass**
der erste Sender (5) und der erste Empfänger (11) bezogen auf die Achse der ersten Rohrsegmente (3) an den axial gegenüberliegenden Seiten der ersten Rohrsegmente (3) angeordnet sind.

2. Drehübertrager nach Anspruch 1, **dadurch gekennzeichnet , dass** der Drehübertrager zweite lichtleitende bogenförmige Rohrsegmente (3) aufweist, wobei die zweiten Rohrsegmente (4) zu einer zweiten rohrförmigen Anordnung angeordnet sind, wobei die ersten Rohrsegmente (3) und die zweiten Rohrsegmente (4) relativ zueinander drehbar und koaxial angeordnet sind, wobei die ersten Lichtsignale vom ersten Sender (5) über die ersten und die zweiten Rohrsegmente zum ersten Empfänger (11) übertragbar sind, wobei der Drehübertrager mindestens einen zweiten Sender (16) zur Erzeugung von zweiten Lichtsignalen und mindestens einen zweiten Empfänger (13) zum Empfang von zweiten Lichtsignalen aufweist, wobei die zweiten Lichtsignale vom zweiten Sender (5) über die zweiten und die ersten Rohrsegmente zum zweiten Empfänger (13) übertragbar sind.

3. Drehübertrager nach Anspruch 1 oder 2, **dadurch gekennzeichnet, dass** zumindest bei einem Teil der ersten Rohrsegmente (3), der erste Sender (5) über mehrere erste Lichtleiter (26) zur Übertragung der ersten Lichtsignale mit den dem ersten Sender (5) zugewandten Stirnseiten (14) der ersten Rohrsegmente (3) verbunden ist.

4. Drehübertrager nach Anspruch 3, wobei die ersten Lichtleiter in der Mitte der jeweiligen Stirnseite (14) mit den ersten Rohrsegmenten (3) verbunden sind.

5. Drehübertrager nach Anspruch 2, **dadurch gekennzeichnet, dass** zumindest bei einem Teil der zweiten Rohrsegmente, der zweite Sender über mehrere zweite Lichtleiter zur Übertragung der zweiten Lichtsignale mit den dem zweiten Sender zugewandten Stirnseiten der zweiten Rohrsegmente verbunden ist.

6. Drehübertrager nach Anspruch 5, **dadurch gekennzeichnet, dass** die zweiten Lichtleiter in der Mitte der jeweiligen Stirnseite mit den zweiten Rohrsegmenten verbunden sind.

7. Drehübertrager nach Anspruch 1 oder 2, **dadurch gekennzeichnet , dass** der Drehübertrager mehrere erste Sender (5) zur Erzeugung erster Lichtsignale aufweist, wobei die ersten Sender (5) derart angeordnet sind, dass eine Einspeisung der ersten Lichtsignale in die den ersten Sendern (5) zugewandten Stirnseiten (14) der ersten Rohrsegmente (3) erfolgt.

8. Drehübertrager nach Anspruch 7, **dadurch gekennzeichnet , dass** die Einspeisung der ersten Lichtsignale in der Mitte der den ersten Sendern (5) zugewandten Stirnseiten (14) der ersten Rohrsegmente (3) erfolgt.

9. Drehübertrager nach Anspruch 2, 7 oder 8, **dadurch gekennzeichnet , dass** der Drehübertrager mehrere zweite Sender (16) zur Erzeugung zweiter Lichtsignale aufweist, wobei die zweiten Sender (16) derart angeordnet sind, das eine Einspeisung der zweiten Lichtsignale in die den zweiten Sendern (16) zugewandten Stirnseiten der zweiten Rohrsegmente (4) erfolgt.

10. Drehübertrager nach Anspruch 9, **dadurch gekennzeichnet, dass** die Einspeisung der zweiten Lichtsignale in der Mitte der den zweiten Sendern (16) zugewandten Stirnseiten der zweiten Rohrsegmente erfolgt.

11. Drehübertrager nach einem der vorherigen Ansprüche,
**dadurch gekennzeichnet , dass** der erste Empfänger über einen Splitter (10) mit mindestens zwei benachbart angeordneten ersten Rohrsegmenten (3) verbunden ist.

12. Drehübertrager nach einem der Ansprüche 2 bis 11,
**dadurch gekennzeichnet , dass** der zweite Empfänger über einen lichtleitenden Splitter mit den dem Empfänger zugewandten Stirnseiten von mindestens zwei benachbart angeordneten zweiten Rohrsegmenten (4) verbunden ist.

13. Drehübertrager nach einem der vorhergehenden Ansprüche,
**dadurch gekennzeichnet , dass** der erste Empfänger (11) im Bereich um die Mitte der Stirnseite (14) eines der ersten Rohrsegmente (3) angeordnet ist und/oder der zweite Empfänger (13) im Bereich um die Mitte der Stirnseite eines der zweiten Rohrsegmente (4) angeordnet ist.

14. Drehübertrager nach einem der vorherigen Ansprüche,
**dadurch gekennzeichnet , dass** die ersten und/oder die zweiten Rohrsegmente eine dünne Wandstärke aufweisen.

## Claims

1. Rotary transformer, in which the rotary transformer has first light-conducting curved tube segments (3), the first tube segments (3) being disposed to form a first tubular arrangement (18), the rotary transformer having at least one first transmitter (5) for producing first light signals and at least one first receiver (11) for receiving the first light signals, it being possible for the first light signals to be transmitted from the first transmitter (5) by way of the first tube segments (3) to the first receiver (11)
**characterised in that**
the first transmitter (5) and the first receiver (11) are arranged on the axially opposite sides of the first tube segment (3) in respect of the axis of the first tube segment (3).

2. Rotary transformer according to claim 1, **characterised in that** the rotary transformer has second light-conducting curved tube segments (3), the second tube segments (4) being disposed to form a second tubular arrangement, with the first tube segments (3) and the second tube segments (4) being disposed coaxially and in such a manner that they can be rotated in relation to one another, it being possible for the first light signals to be transmitted from the first transmitter (5) by way of the first and second tube segments to the first receiver (11), with the rotary transformer having at least one second transmitter (16) for producing second light signals and at least one second receiver (13) for receiving second light signals, it being possible for the second light signals to be transmitted from the second transmitter (5) by way of the second and first tube segments to the second receiver (13).

3. Rotary transformer according to claim 1 or 2, **characterised in that** the first transmitter (5) is connected, at least at some of the first tube segments (3), by way of a number of first optical waveguides (26) for transmitting the first signals to the end faces (14) of the first tube segments (3) facing the first transmitter (5).

4. Rotary transformer according to claim 3, with the first optical waveguides being connected to the first tube segments (3) at the centre of the respective end face (14).

5. Rotary transformer according to claim 2, **characterised in that** the second transmitter is connected, at least at some of the second tube segments, by way of a number of second optical waveguides for transmitting the second light signals to the end faces of the second tube segments facing the second transmitter.

6. Rotary transformer according to claim 5, **characterised in that** the second optical waveguides are connected to the second tube segments at the centre of the respective end face.

7. Rotary transformer according to claim 1 or 2, **characterised in that** the rotary transformer has a number of first transmitters (5) for producing first light signals, the first transmitters (5) being disposed in such a manner that the first light signals are fed into the end faces (14) of the first tube segments (3) facing the first transmitters (5).

8. Rotary transformer according to claim 7, **characterised in that** the first light signals are fed in at the centre of the end faces (14) of the first tube segments (3) facing the first transmitters (5).

9. Rotary transformer according to claim 2, 7 or 8, **characterised in that** the rotary transformer has a number of second transmitters (16) for producing second light signals, the second transmitters (16) being disposed in such a manner that the second light signals are fed into the end faces of the second tube segments (4) facing the second transmitters (16).

10. Rotary transformer according to claim 9, **characterised in that** the second light signals are fed in at the centre of the end faces of the second tube segments facing the second transmitters (16).

11. Rotary transformer according to one of the preceding claims, **characterised in that** the first receiver is connected by way of a splitter (10) to at least two adjacently disposed first tube segments (3).

12. Rotary transformer according to one of claims 2 to 11, **characterised in that** the second receiver is connected by way of a light-conducting splitter to the end faces of at least two adjacently disposed second tube segments (4) facing the receiver.

13. Rotary transformer according to one of the preceding claims, **characterised in that** the first receiver (11) is disposed in the region around the centre of the end face (14) of one of the first tube segments (3) and/or the second receiver (13) is disposed in the region around the centre of the end face of one of the second tube segments (4).

14. Rotary transformer according to one of the preceding claims, **characterised in that** the first and/or second tube segments have a thin wall thickness.

## Revendications

1. Transmetteur de rotation, dans lequel le transmetteur de rotation a de premiers segments (3) de tube arqués conducteurs de la lumière, les premiers segments (3) de tube étant disposés en un premier agencement (18) en forme de tube, le transmetteur de rotation ayant au moins un premier émetteur (5) de production de premiers signaux lumineux et au moins un premier récepteur (11) de réception des premiers signaux lumineux, les premiers signaux lumineux pouvant être transmis du premier émetteur (5) au premier récepteur (11) par les premiers segments (3) de tube,
**caractérisé en ce que**
le premier émetteur (5) et le premier récepteur (11) sont, rapportés à l'axe des premiers segments (3) de tube, disposés sur les côtés opposés axialement des premiers segments (3) de tube.

2. Transmetteur de rotation suivant la revendication 1, **caractérisé en ce que** le transmetteur de rotation a des deuxièmes segments (3) de tube arqués conducteurs de la lumière, les deuxièmes segments (4) de tube étant disposés en un deuxième agencement en forme de tube, les premiers segments (3) de tube et les deuxièmes segments (4) de tube étant montés coaxialement et tournant les uns par rapport aux autres, les premiers signaux lumineux du premier émetteur (5) pouvant être transmis au premier récepteur (11) par les premiers et par les deuxièmes segments de tube, le transmetteur de rotation ayant au moins un deuxième émetteur (16) de production de deuxièmes signaux lumineux et au moins un deuxième récepteur (13) de réception de deuxièmes signaux lumineux, les deuxièmes signaux lumineux pouvant être transmis du deuxième émetteur (5) au deuxième récepteur (13) par les deuxièmes et par les premiers segments de tube.

3. Transmetteur de rotation suivant la revendication 1 ou 2, **caractérisé en ce que**, au moins pour une partie des premiers segments (3) de tube, le premier émetteur (5) est relié aux côtés frontaux (14), tournés vers le premier émetteur (5), des premiers segments (3) de tube par plusieurs premières fibres optiques (16) de transmission des premiers signaux lumineux.

4. Transmetteur de rotation suivant la revendication 3, dans lequel les premières fibres optiques sont reliées aux premiers segments (3) de tube au milieu des côtés (14) frontaux respectifs.

5. Transmetteur de rotation suivant la revendication 2, **caractérisé en ce que**, au moins pour une partie des deuxièmes segments de tube, le deuxième émetteur est relié aux côtés frontaux, tournés vers le deuxième émetteur, des deuxièmes segments de tube par plusieurs deuxièmes fibres optiques de transmission des deuxièmes signaux lumineux.

6. Transmetteur de rotation suivant la revendication 5, **caractérisé en ce que** les deuxièmes fibres optiques sont reliées aux deuxièmes segments de tube au milieu des côtés frontaux respectifs.

7. Transmetteur de rotation suivant la revendication 1 ou 2, **caractérisé en ce que** le transmetteur de rotation a plusieurs premiers émetteurs (5) de production de premiers signaux lumineux, les premiers émetteurs (5) étant disposés de manière à ce qu'une injection des premiers signaux lumineux s'effectue dans les côtés (14) frontaux, tournés vers les premiers émetteurs (5), des premiers segments (3) de tube.

8. Transmetteur de rotation suivant la revendication 7, **caractérisé en ce que** l'injection des premiers signaux lumineux s'effectue au milieu des côtés (14) frontaux, tournés vers les premiers émetteurs (5), des premiers segments (3) de tube.

9. Transmetteur de rotation suivant la revendication 2, 7 ou 8, **caractérisé en ce que** le transmetteur de rotation a plusieurs deuxièmes émetteurs (16) de production de deuxièmes signaux lumineux, les deuxièmes émetteurs (16) étant disposés de manière à ce qu'une injection des deuxièmes signaux lumineux s'effectue dans les côtés frontaux, tournés vers les deuxièmes émetteurs (16), des deuxièmes segments de tube.

10. Transmetteur de rotation suivant la revendication 9, **caractérisé en ce que** l'injection des deuxièmes signaux lumineux s'effectue au milieu des côtés frontaux, tournés vers les deuxièmes émetteurs (16), des deuxièmes segments de tube.

11. Transmetteur de rotation suivant l'une des revendications précédentes, **caractérisé en ce que** le premier récepteur est relié à au moins deux premiers segments (3) de tube voisins par un diviseur.

12. Transmetteur de rotation suivant l'une des revendications 2 à 11, **caractérisé en ce que** le deuxième récepteur est, par un diviseur conducteur de la lumière, relié aux côtés frontaux, tournés vers le récepteur, d'au moins deux deuxièmes segments (4) de tube disposés en étant voisins.

13. Transmetteur de rotation suivant l'une des revendications précédentes, **caractérisé en ce que** le premier récepteur (11) est disposé dans la région autour du milieu du côté (14) frontal de l'un des premiers segments (3) de tube et/ou le deuxième récepteur (13) est disposé dans la région autour du milieu du côté frontal de l'un des deuxièmes segments (4) de tube.

14. Transmetteur de rotation suivant l'une des revendications précédentes, **caractérisé en ce que** les premiers et/ou les deuxièmes segments de tube ont une épaisseur de paroi qui est petite.
